# FASCICULE DE BREVET EUROPEEN

(11) **EP 1 779 026 B1**
(45) Date de publication et mention de la délivrance du brevet: **28.10.2009**
(21) Numéro de dépôt: 05778173.4
(22) Date de dépôt: 17.06.2005
(51) Int. Cl.: F17C 5/00, F17C 13/02, F17C 13/08

(54) **SYSTEME DE STOCKAGE DE GAZ, PROCEDE DE MISE EN OEUVRE ET VEHICULE INCORPORANT UN TEL SYSTEME**
GASLAGERUNGSSYSTEM, VERFAHREN DAMIT UND FAHRZEUG DAMIT
GAS STORAGE SYSTEM, METHOD USING SAME AND VEHICLE INCORPORATING SAME

(30) Priorité: 12.08.2004 FR 0451839
(43) Date de publication de la demande: 02.05.2007
(73) Titulaire: L'AIR LIQUIDE, Société Anonyme pour l'Etude et l'Exploitation des Procédés Georges Claude, 75007 Paris (FR)
(72) Inventeur: CANNET, Gilles, F-95620 PARMAIN (FR); PISOT, Philippe, F-95290 L'ISLE ADAM (FR)
(74) Mandataire: De Cuenca, Emmanuel Jaime
(86) Numéro de dépôt international: PCT/FR2005/050457
(87) Numéro de publication internationale: WO 2006/021699

(56) Documents cités:
- EP-A- 1 146 277
- FR-A- 2 839 059
- FR-A- 2 841 890
- US-A1- 2002 148 502

## Description

La présente invention concerne les systèmes de stockage de gaz pour la fourniture de gaz à une ligne d'alimentation d'au moins un poste utilisateur, plus particulièrement mais non exclusivement pour la fourniture en gaz d'une source de puissance dans un véhicule, typiquement un véhicule automobile, et les véhicules intégrant un tel système de stockage de gaz, typiquement du gaz naturel ou de l'hydrogène.

Que ce soit pour une utilisation en stationnaire ou en utilisation embarquée dans un véhicule, la gestion des réserves de gaz relève de deux approches générales, à savoir le rechargement in-situ d'une unité de stockage installée à demeure ou l'échange d'une unité de stockage amovible vide contre une nouvelle unité de stockage pleine.

Le document FR 2839059 A1 décrit une station, un système et un procédé de ravitaillement d'un véhicule automobile en gaz combustible dans lesquels le véhicule utilise un réservoir unique pouvant être échangé par des moyens mécanisés.

Le réservoir unique comprend des moyens d'accouplement/désaccouplement coopérant avec le véhicule et un dispositif de fermeture ainsi qu'un détendeur.

La présente invention a pour objet de proposer des systèmes de stockage de gaz simples et bon marché, permettant d'optimiser l'échange et la gestion des consommations de gaz.

Pour ce faire, selon une caractéristique de l'invention, le système de stockage comprend au moins un premier et un second modules de stockage individuels connectables simultanément à la ligne d'alimentation, les modules étant individuellement amovibles et ayant chacun au moins un conduit de sortie connectable chacun par un dispositif de connexion rapide et via une électrovanne associés, à la ligne d'alimentation.

Selon d'autres caractéristiques de l'invention :
- le système comprend, en amont de chaque électrovanne, un capteur de pression fournissant à une unité électronique de contrôle un signal de pression représentatif de la pression de gaz disponible dans le module associé ;
- les premier et second ensembles ont des capacités différentes mais comprennent avantageusement des réservoirs identiques en nombre différent ;
- chaque réservoir est logé dans un logement d'un châssis stationnaire ou déplaçable entre au moins deux positions ;
- chaque réservoir contient un gaz sous une pression supérieure à 120 bar., typiquement supérieure à 300 bar. ;
- chaque réservoir est associé, en sortie, à une vanne d'isolement.

L'invention concerne également un véhicule utilisant ledit gaz comme source de puissance et incorporant un tel système de stockage.

La présente invention a également pour objet un procédé de mise en oeuvre d'un système du type défini ci-dessus, selon lequel on connecte, par ouverture de l'électrovanne du module concerné, à la ligne d'alimentation un premier desdits modules de stockage puis, après vidange du premier, on connecte le second module, le premier module vidangé étant parallèlement ou ensuite déconnecté et remplacé par un même module plein.

D'autres caractéristiques et avantages de la présente invention ressortiront de la description suivante de mode de réalisation, donnée à titre illustratif mais nullement limitatif, faite en relation avec des dessins annexés, sur lesquels :
- la figure 1 est une vue schématique d'un mode de réalisation de système de stockage de gaz selon l'invention ;
- la figure 2 est une vue partiellement en coupe longitudinale, d'un mode de réalisation, d'un module unitaire selon l'invention ;

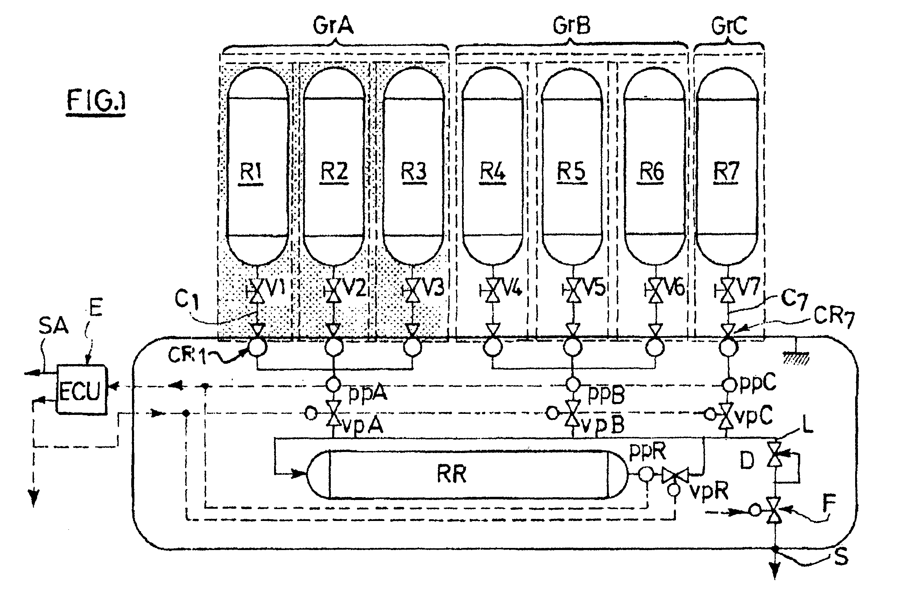

Dans le mode de réalisation particulier représenté schématiquement sur la figure 1, un système selon l'invention comprend trois modules de stockage de gaz différenciés GrA, GrB, GrC, dont au moins un est de capacité différente des autres, mais tous réalisés à partir de réservoirs ou bouteilles identiques Rᵢ. Dans l'exemple représenté, deux modules (GrA, GrB) sont constitués de trois réservoirs Rᵢ tandis que le troisième module GrC est constitué d'un seul réservoir R₇.

Selon un aspect de l'invention, chaque réservoir Rᵢ est associé à un conduit de sortie respectif Cᵢ incorporant une vanne d'isolement Vᵢ et se terminant par un élément enfichable d'un dispositif de connexion rapide CRᵢ dont l'autre élément apparié est relié, en aval, à une ligne L d'alimentation reliée, à partir d'une sortie S en aval d'une électro-valve de fermeture F, à au moins un poste utilisateur, par exemple un moteur thermique et/ou une pile à combustible d'un véhicule automobile, auquel cas le gaz est de l'hydrogène.

Dans le mode de réalisation représenté, à chaque module GrA/B/C, est associé une électrovanne vpA/B/C commandant la connexion entre les sorties des dispositifs de connexion rapide des modules et la ligne d'alimentation L. De plus, l'amont de chaque électrovanne vpA/B/C est associé à un capteur de pression ppA/B/C détectant la pression disponible en sortie du module associé et transmettant chacun un signal de niveau de pression à une unité électronique de contrôle E capable de fournir en sortie des signaux de commande des électrovannes vpA/B/C et des signaux d'alerte SA actionnant par exemple des voyants sur le tableau de bord indiquant qu'un module est vide ou presque vide et indiquant l'électrovanne vpA/B/C ouverte.

Avec un tel agencement, les modules GrA, GrB et GrC sont individuellement amovibles et la pression dans chaque module est analysée par les capteurs ppA/B/C dont les données sont analysées par l'unité E, les vannes pilotées vpA/B/C commandant sélectivement et séquentiellement l'envoi du gaz d'un module Gr vers la ligne d'alimentation L. Après connexion d'un module, ses vannes Vᵢ sont ouvertes pour mettre le contenu des différents réservoirs en communication avec la ligne L. Le dispositif selon l'invention permet donc, en ouvrant successivement les électrovannes vpA/B/C de vider séquentiellement les différents modules de telle sorte qu'au moment du réapprovisionnement en gaz, il est possible de remplacer individuellement le ou les modules vides et ceux-là seulement.

Pour pratiquer cet échange, l'électrovanne correspondante vpA/B/C est fermée, puis les vannes Vᵢ du module à échanger sont fermées et les connexions rapides CRᵢ débranchées. Un nouveau module Gr plein est mis en place et la séquence décrite précédemment peut être répétée. Parallèlement, après vérification de l'état du ou des réservoirs du module retirés, ces réservoirs sont de nouveau remplis et entreposés en vue d'un nouveau cycle.

Les réservoirs Rᵢ peuvent contenir un gaz sous faible pression par exemple adsorbé sur un support, typiquement des hydrures pour la fourniture d'hydrogène.

Les réservoirs Rᵢ contiennent alternativement un gaz sous haute pression, supérieure à 120 bar, typiquement supérieure à 300 bar, et pouvant avantageusement dépasser 400 bar. Dans ce cas, la ligne L est pourvue, en amont de l'électrovanne de fermeture F, d'un détendeur D. En variante, notamment dans le cas de stockage sous haute pression, pouvant atteindre 700 bar, les vannes Vᵢ sont avantageusement remplacées par des robinets-détendeurs abaissant à un niveau intermédiaire la pression du gaz délivré par les réservoirs Rᵢ, ce qui permet de procéder à des connexions sous pression réduite, avec des risques réduits de fuites au moment de la mise en place des réservoirs pleins.

Avantageusement, comme représenté sur la figure 1, le système comporte en outre un récipient de réserve RR, installé à demeure, agencé en parallèle de la partie amont de la ligne d'alimentation L. Ce récipient de réserve RR est rempli à partir du contenu des modules de stockage amovibles GrA/B/C, se vidange, via une vanne pilotée propre vpR associée à un capteur de pression ppR, et son remplissage conférant une souplesse supplémentaire au système dans le but de permettre de réaliser la vidange complète des différents modules GrA/B/C sans prendre le risque de manquer de gaz.

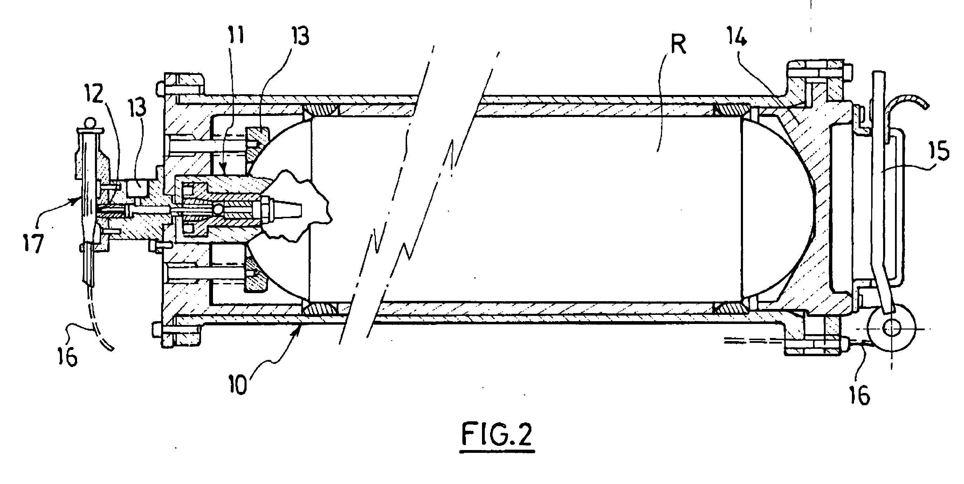

On a représenté sur la figure 2 un mode de réalisation d'un réservoir R logeable dans un châssis fixe 10 d'un module Gr tel que précédemment décrit. Le réservoir R est réalisé sous la forme d'une bouteille, intégrant, dans son col 11, un dispositif de connexion rapide avec clapet anti-retour actionnable par un plongeur 12 coulissant dans le châssis 10.

Dans ce mode de réalisation, le réservoir R est monté dans un logement du châssis 10 en venant porter, par sa face avant, contre un anneau de réception à appui élastique 13 et est verrouillé en place par un fond 14 monté dans le châssis et comprenant un levier de verrouillage 15 actionnant, lors de son basculement, un câble 16 déplaçant une tige à came 17 coopérant avec le plongeur 12 ouvrant la communication entre le réservoir R et l'orifice de sortie de gaz 13 lorsque le réservoir R est en position dans le châssis 10 et bloquant cette communication dès actionnement du levier 15 en vue de l'extraction du réservoir R de son logement.

Quoique l'invention ait été décrite en relation avec des modes de réalisation particuliers, elle ne s'en trouve pas limitée mais est susceptible de modifications et de variantes qui apparaîtront à l'homme du métier dans le cadre des revendications ci-après.

## Revendications

1. Système de stockage de gaz pour la fourniture de gaz à une ligne d'alimentation (L) d'au moins un poste utilisateur, comprenant au moins un premier et un second modules de stockage (GrA/B/C) connectables en parallèle simultanément à la ligne d'alimentation les modules étant individuellement amovibles et ayant chacun au moins un conduit de sortie (C₁, C₇) respectif connectable chacun, par un dispositif de connexion rapide (CR₁, CR₇) et via une électrovanne associés (vpA/B/C), à la ligne d'alimentation (L).

2. Système selon la revendication 1, **caractérisé en ce qu'**il comprend, en amont de l'électrovanne (vpA/B/C) un capteur de pression (ppA/B/C) fournissant un signal de pression à une unité électronique de contrôle (E).

3. Système selon la revendication 2, **caractérisé en ce que** l'unité électronique de contrôle (E) est conformée pour fournir en sortie des signaux de commande des électrovannes (Vₚ A/BC) et des signaux d'alerte (SA) actionnant des voyants sur un tableau de bord indiquant qu'un module (GrA/B/C) est vide on presque vide et indiquant l'électrovanne ouverte.

4. Système selon l'une des revendications précédentes, **caractérisé en ce que** les premier et second modules (Gr) ont des capacités différentes.

5. Système selon l'une des revendications précédentes, **caractérisé en ce que** les premier et second modules (Gr) comprennent des réservoirs identiques (R₁, R₇).

6. Système selon la revendication 5, **caractérisé en ce que** chaque réservoir (Rᵢ) est reçu dans un logement d'un châssis stationnaire (10) du module.

7. Système selon la revendication 5, **caractérisé en ce que** les réservoirs sont montés sur un châssis déplaçable entre au moins deux positions.

8. Système selon l'une des revendications 5 à 7, **caractérisé en ce que** chaque réservoir est associé, en sortie, à une vanne d'isolement (Vᵢ).

9. Système selon l'une des revendications précédentes, **caractérisé en ce qu'**il comprend un réservoir de réserve (RR) en parallèle avec la ligne d'alimentation (L).

10. Système selon l'une des revendications précédentes, **caractérisé en ce que** chaque module de stockage (Gr) contient un gaz sous une pression supérieure à 120 bar.

11. Système selon la revendications 10, **caractérisé en ce que** la ligne d'alimentation (L) comprend un détendeur (D).

12. Véhicule, utilisant ledit gaz comme source de puissance, incorporant un système selon l'une des revendications précédentes.

13. Procédé de mise en oeuvre d'un système selon l'une des revendications 1 à 11, dans lequel on connecte à la ligne d'alimentation (L) un desdits modules de stockage (GrA/B/C) puis, après vidange, un autre desdits modules.

14. Procédé selon la revendication 13, dans lequel le premier module vidangé est déconnecté et remplacé par un même module plein.

15. Procédé selon l'une des revendications 13 et 14, dans lequel le gaz est de l'hydrogène.

16. Procédé selon l'une quelconque des revendications 13 ou 14, **caractérisé en ce que** le système comprend, en amont de l'électrovanne (vpA/B/C) un capteur de pression (ppA/B/C) fournissant un signal de pression à une unité électronique de contrôle (E), la pression dans chaque module étant analysée par les capteurs (ppA/B/C) dont les données sont analysées par l'unité électronique de contrôle (E), les vannes pilotées (vpA/B/C) commandant sélectivement et séquentiellement l'envoi du gaz d'un module (Gr) vers la ligne d'alimentation (L).

17. Procédé selon l'une quelconque des revendications 13 à 16,
**caractérisé en ce que**
les premier et second modules (Gr) comprennent des réservoirs identiques (R₁, R₇),
chaque réservoir étant associé, en sortie, à une vanne d'isolement (Vᵢ), le procédé étant **caractérisé en ce que** après connexion d'un module (GrA/B/C) ses vannes d'isolement (Vᵢ) sont ouvertes pour mettre le contenu des différents réservoirs (R₁, R₇) en communication avec la ligne d'alimentation (L).

18. Procédé selon l'une quelconque des revendications 16 à 17,
**caractérisé en ce qu'**il comprend une étape consistant à ouvrir
successivement les électrovannes (VpA/B/C) pour vider séquentiellement les différents modules (GrA/B/C) de telle sorte qu'au moment d'un réapprovisionnement en gaz, est remplacé individuellement le ou les modules vides (GrA/B/C) et ceux-là seulement.

## Claims

1. Gas storage system for delivering gas to a line (L) supplying at least one user station, comprising at least one first and one second storage module (GrA/B/C) which can be connected in parallel simultaneously to the supply line, the modules being individually removable, each having at least one respective output line (C₁, C₇), each of which can be connected by a rapid connection device (CR₁, CR₇) and via an associated solenoid valve (vpA/B/C) to the supply line (L).

2. System according to Claim 1, **characterized in that** it comprises, upstream of the solenoid valve (vpA/B/C), a pressure sensor (ppA/B/C) delivering a pressure signal to an electronic control unit (E).

3. System according to Claim 2, **characterized in that** the electronic control unit (E) is designed to deliver, as output, control signals for controlling the solenoid valves (vpA/B/C) and warning signals (SA) for activating warning lamps on an instrument panel indicating that a module (GrA/B/C) is empty or almost empty and indicating the solenoid valve opened.

4. System according to one of the preceding claims, **characterized in that** the first and second modules (Gr) have different capacities.

5. System according to one of the preceding claims, **characterized in that** the first and second modules (Gr) comprise identical tanks (R₁, R₇)

6. System according to Claim 5, **characterized in that** each tank (Rᵢ) is received in a housing of a stationary chassis (10) of the module.

7. System according to Claim 5, **characterized in that** the tanks are mounted on a chassis that can be moved between at least two positions.

8. System according to one of Claims 5 to 7,
**characterized in that** each tank is associated, at the outlet, with an isolating valve (Vᵢ).

9. System according to one of the preceding claims, **characterized in that** it includes a reserve tank (RR) in parallel with the supply line (L).

10. System according to one of the preceding claims, **characterized in that** each storage module (Gr) contains a gas under a pressure greater than 120 bar.

11. System according to Claim 10, **characterized in that** the supply line (L) includes an expansion valve (D).

12. Vehicle using said gas as a power source, incorporating a system according to one of the preceding claims.

13. Method for implementing a system according to one of Claims 1 to 11, in which one of said storage modules (GrA/B/C), and then, after emptying, another of said modules, is connected to the supply line (L).

14. Method according to Claim 13, in which the first emptied module is disconnected and replaced by an identical full module.

15. Method according to either of Claims 13 and 14, in which the gas is hydrogen.

16. Method according to either of Claims 13 and 14, **characterized in that** the system comprises, upstream of the solenoid valve (vpA/B/C), a pressure sensor (ppA/B/C) delivering a pressure signal to an electronic control unit (E), the pressure in each module being analyzed by the sensors (ppA/B/C) the data of which are analyzed by the electronic control unit (E), the controlled valves (vpA/B/C) selectively and sequentially controlling the dispatch of gas from a module (Gr) to the supply line (L).

17. Method according to any one of Claims 13 to 16, **characterized in that** the first and second modules (Gr) comprise identical tanks (R₁, R₇), each tank being associated, at the outlet, with an isolating valve (Vᵢ), the method being **characterized in that**, after a module (GrA/B/C) is connected, its isolating valves (Vᵢ) are opened so as to put the contents of the various tanks (R₁, R₇) into communication with the supply line (L).

18. Method according to either of Claims 16 and 17, **characterized in that** it comprises a step consisting in successively opening the solenoid valves (vpA/B/C) so as to sequentially empty the various modules (GrA/B/C) so that, at the moment gas is provided again, the empty module or modules (GrA/B/C) and only these are individually replaced.

## Patentansprüche

1. System zum Speichern von Gas für die Lieferung von Gas zu einer Versorgungsleitung (L) wenigstens einer Anwenderstation, mit wenigstens einem ersten und einem zweiten Speichermodul (GrA/B/C), die parallel und gleichzeitig mit der Versorgungsleitung verbunden werden können, wobei die Module einzeln entnehmbar sind und jeweils wenigstens eine Ausgangsleitung (C₁, C₇) besitzen, die jeweils über eine Schnellverbindervorrichtung (CR₁, CR₇) und über ein zugeordnetes Elektroventil (vpA/B/C) mit der Versorgungsleitung (L) verbunden werden können.

2. System nach Anspruch 1, **dadurch gekennzeichnet, dass** es stromaufseitig von dem Elektroventil (vpA/B/C) einen Drucksensor (ppA/B/C) aufweist, der ein Drucksignal an eine elektronische Steuereinheit (E) liefert.

3. System nach Anspruch 2, **dadurch gekennzeichnet, dass** die elektronische Steuereinheit (E) dazu ausgelegt ist, Signale zur Steuerung der Elektroventile (vpA/B/C) sowie Warnsignale (SA) auszugeben, die Anzeigeleuchten auf einem Armaturenbrett betätigen, die angeben, dass ein Modul (GrA/B/C) leer oder nahezu leer ist, und das offene Elektroventil angeben.

4. System nach einem der vorhergehenden Ansprüche, **dadurch gekennzeichnet, dass** das erste und das zweite Modul (Gr) unterschiedliche Kapazitäten haben.

5. System nach einem der vorhergehenden Ansprüche, **dadurch gekennzeichnet, dass** das erste und das zweite Modul (Gr) gleiche Vorratsbehälter (R₁, R₇) aufweisen.

6. System nach Anspruch 5, **dadurch gekennzeichnet, dass** jeder Vorratsbehälter (Rᵢ) in einem Aufnahmesitz eines stationären Rahmens (10) des Moduls aufgenommen ist.

7. System nach Anspruch 5, **dadurch gekennzeichnet, dass** die Vorratsbehälter auf einem Rahmen montiert sind, der zwischen wenigstens zwei Positionen verlagerbar ist.

8. System nach einem der Ansprüche 5 bis 7, **dadurch gekennzeichnet, dass** jedem Vorratsbehälter am Ausgang ein Trennschieber (Vᵢ) zugeordnet ist.

9. System nach einem der vorhergehenden Ansprüche, **dadurch gekennzeichnet, dass** es einen Reservevorratsbehälter (RR) parallel zu der Versorgungsleitung (L) aufweist.

10. System nach einem der vorhergehenden Ansprüche, **dadurch gekennzeichnet, dass** jedes Speichermodul (Gr) ein Gas enthält, das mit einem Druck von mehr als 120 Bar beaufschlagt ist.

11. System nach Anspruch 10, **dadurch gekennzeichnet, dass** die Versorgungsleitung (L) ein Druckreduzierventil (D) enthält.

12. Fahrzeug, das das Gas als Leistungsquelle verwendet und ein System nach einem der vorhergehenden Ansprüche enthält.

13. Verfahren zum Betreiben eines Systems nach einem der Ansprüche 1 bis 11, wobei an die Versorgungsleitung (L) eines der Speichermodule (GrA/B/C) angeschlossen wird und nach dessen Leerung ein anderes der Module angeschlossen wird.

14. Verfahren nach Anspruch 13, wobei das erste geleerte Modul abgetrennt und durch ein gleiches volles Modul ersetzt wird.

15. Verfahren nach einem der Ansprüche 13 und 14, wobei das Gas Wasserstoff ist.

16. Verfahren nach einem der Ansprüche 13 oder 14, **dadurch gekennzeichnet, dass** das System stromaufseitig von dem Elektroventil (vpA/B/C) einen Drucksensor (ppA/B/C) enthält, der ein Drucksignal an eine elektronische Steuereinheit (E) liefert,
wobei der Druck in jedem Modul durch die Sensoren (ppA/B/C), deren Daten durch die elektronische Steuereinheit (E) analysiert werden, analysiert wird, wobei die gesteuerten Schieber (vpA/B/C) wahlweise und sequentiell das Liefern von Gas von einem Modul (Gr) zu der Versorgungsleitung (L) steuern.

17. Verfahren nach einem der Ansprüche 13 bis 16,
**dadurch gekennzeichnet, dass**
das erste und das zweite Modul (Gr) gleiche Vorratsbehälter (R₁, R₇) enthalten und jedem Vorratsbehälter am Ausgang ein Trennschieber (Vᵢ) zugeordnet ist,
wobei das Verfahren **dadurch gekennzeichnet ist, dass** nach dem Anschließen eines Moduls (GrA/B/C) dessen Trennschieber (Vᵢ) geöffnet werden, um eine Verbindung zwischen dem Inhalt der verschiedenen Vorratsbehälter (R₁, R₇) mit der Versorgungsleitung (L) herzustellen.

18. Verfahren nach einem der Ansprüche 16 bis 17, **dadurch gekennzeichnet, dass** es einen Schritt enthält, der darin besteht, nacheinander die Elektroventile (vpA/B/C) zu öffnen, um die verschiedenen Module (GrA/B/C) sequentiell zu entleeren, derart, dass zum Zeitpunkt einer Wiederbelieferung mit Gas das oder die leeren Module (GrA/B/C) und nur diese einzeln ersetzt werden.
